# EUROPÄISCHE PATENTSCHRIFT

(11) **EP 2 643 892 B1**
(45) Veröffentlichungstag und Bekanntmachung des Hinweises auf die Patenterteilung: **15.10.2014**
(21) Anmeldenummer: 11788366.0
(22) Anmeldetag: 02.11.2011
(51) Int. Cl.: H01R 13/642, H02K 5/22

(54) **ELEKTRISCHE MASCHINE**
ELECTRIC MACHINE
MOTEUR ÉLECTRIQUE

(30) Priorität: 25.11.2010 DE 202010015860 U; 13.04.2011 DE 202011005228 U; 18.05.2011 DE 102011101932
(43) Veröffentlichungstag der Anmeldung: 02.10.2013
(73) Patentinhaber: Baumüller Nürnberg GmbH, 90482 Nürnberg (DE)
(72) Erfinder: LEMKE, Peter, 91126 Schwabach (DE); GUTJAHR, Frank, 92268 Etzelwang (DE)
(74) Vertreter: FDST Patentanwälte
(86) Internationale Anmeldenummer: PCT/EP2011/005509
(87) Internationale Veröffentlichungsnummer: WO 2012/069134

(56) Entgegenhaltungen:
- EP-A2- 0 853 369
- DE-A1- 2 315 192
- JP-A- 59 220 042
- JP-A- 2010 028 923
- US-A- 3 714 617
- US-A- 4 712 029

## Beschreibung

Die Erfindung betrifft eine elektrische Maschine gemäß dem Oberbegriff des Anspruchs 1. Eine derartige Maschine in Form eines Elektromotors ist aus der DE 23 15 192 A1 bekannt.

Die Erfindung betrifft auch ein Maschinengehäuse mit den Merkmalen des Anspruchs 9.

Unter elektrischer Maschine wird insbesondere ein fluidgekühlter Motor oder Generator, vorzugsweise mit integriertem Umrichter, als motorisch bzw. generatorisch arbeitender Antrieb eines Aggregates oder Hilfsaggregates eines Nutzfahrzeuges verstanden.

Eine derartige elektrische Maschine wird, insbesondere abhängig vom Einsatzgebiet und von der Leistung, häufig statorseitig mit einem Fluid gekühlt. Das Kühlmedium, vorzugsweise Öl, wird üblicherweise mittels einer Pumpe gefördert, die von der elektrischen Maschine selbst oder mittels eines separaten Antriebs betätigt wird. Die elektrische Maschine wird in der Regel mittels einer Leistungselektronik (Umrichter, insbesondere Frequenzumrichter, DC/AC- bzw. AC/DC-Wandler oder dergleichen) betrieben. Die Elektronik weist geeigneterweise eine Brückenschaltung aus Halbleiterschaltern auf, deren Anzahl ebenso wie die Anzahl der Brückenzweige von der Phasenzahl der elektrischen Maschine abhängig ist, wobei drei- oder mehrphasige Motoren und Generatoren üblich sind.

Je nach Betrieb der elektrischen Maschine als Motor oder als Generator wird die elektrische Leistung entweder der Maschine für die gewünschte Drehzahl und das bestimmungsgemäße Drehmoment zugeführt, oder der elektrischen Maschine wird die elektrische Leistung entnommen und nachgeschalteten Aggregaten, beispielsweise eines Nutzfahrzeuges, zugeführt. In der Betriebsweise als Generator wird der generatorisch erzeugte mehrphasige Wechselstrom mittels der Elektronik (Umrichter) in einen Gleichstrom gewandelt, der dann beispielsweise über einen Zwischenkreis dem jeweiligen Aggregat oder Verbraucher zugeführt wird. Insbesondere aufgrund häufig vorzufindender beengter Raumverhältnisse und geringem Bauvolumen ist eine kompakte Bauweise wünschenswert, bei der die Leistungssteuerung oder -elektronik möglichst in die elektrische Maschine integriert ist.

Bei einer fluidgekühlten elektrischen Maschine, beispielsweise mit direkt ölgekühlter Statorwicklung, wird eine druckdichte Durchführung der elektrischen Maschinenanschlüsse benötigt, um die Maschine elektrisch mit einem Umrichter bzw. der Leistungssteuerung verbinden zu können. Auch müssen häufig elektrische Signale, beispielsweise von Temperatursensoren, aus dem ölbeaufschlagten Bereich der Maschine herausgeführt werden.

Aus der US 4 712 029 A ist es bei einem ölgekühlten Generator bekannt, eine elektrische Kontaktierung mittels eines Anschlussbolzens mit Isolierbuchse zu realisieren.

Aus der EP 0853 369 A2 ist eine Lagekodierung im Zuge eines elektrischen Anschlusses eines Kabelschuhs an einem Gehäuse einer Fahrzeuglichtmaschine bekannt.

Der Erfindung liegt die Aufgabe zugrunde, eine möglichst kompakte elektrische Maschine anzugeben. Insbesondere sollen geeignete Leitungsführungen und eine sichere sowie montagefreundliche Handhabung bei der Montage der Maschinenanschlüsse ermöglicht sein.

Diese Aufgabe wird erfindungsgemäß durch die Merkmale des Anspruchs 1 gelöst. Vorteilhafte Ausgestaltungen, Weiterbildungen und Varianten sind Gegenstand der Unteransprüche.

Hierzu ist bei einer elektrischen Maschine, insbesondere einem statorseitig gekühlten Generator, das zur Aufnahme eines Stators und eines Rotor mit Statorund/oder Rotorwicklungen dienende Maschinengehäuse mit einem Leitungskanal zur Aufnahme von mit den Wicklungen verbundenen Verbindungsleitungen versehen. Der Leitungskanal, der vorzugsweise in Maschinenlängsrichtung an der Außenseite des Maschinengehäuses verläuft, ist mittels einer Trennplatte mit einer Anzahl von Isolierbuchsen abgedeckt, in die mit den Verbindungsleitungen kontaktierbare Anschlussbolzen lagekodiert eingesteckt sind. Die Trennplatte ist zum insbesondere druckdichten Abdecken des Leitungskanals vorgesehen.

Die Verbindungsleitungen sind praktisch die Wicklungsenden der Maschinenwicklungen oder -spulen, deren Freienden an die die Maschinen- oder Phasenanschlüsse bildenden Anschlussbolzen geführt und dort vorzugsweise mittels Kabelschuhen schraubkontaktiert sind. Geeigneterweise werden die Verbindungsleitungen von den maschineninternen Wicklungen über eine Durchtrittsöffnung in der Gehäusewandung geführt und in den Leitungskanal umgebogen. Da die in dem zweckmäßigerweise in Gehäuselängsrichtung verlaufenden Leitungskanal einzulegenden Verbindungsleitungen bei gleichzeitig praktisch minimiertem Raumbedarf für ein solches Umbiegen im Bereich der Durchtrittsöffnung in den Leitungskanal ausreichend lang sind, ist eine entsprechend ausreichende Feder- oder Biegestrecke hergestellt, um während der Montage die Maschinenanschlüsse bestimmungsgemäß zu kontaktieren, ohne die Verbindungsleitungen anschließend zu deren Unterbringung in das Maschinengehäuse zurückzuschieben. Dies ermöglicht eine besonders kompakte Maschinenbauweise, zumal innerhalb des Maschinengehäuses kein zusätzlicher Raum für die Verbindungsleitungen vorgehalten werden muss. Die in den Leitungskanal mündende Durchtrittsöffnung in der Gehäusewandung verläuft zum Leitungskanal im Wesentlichen senkrecht und befindet sich geeigneterweise an einer Stirn- oder Schmalseite des sich ansonsten vorzugsweise entlang des Maschinengehäuses in Axialrichtung erstreckenden Leitungskanals.

Während die Anschlussbolzen gegenüber den Isolierbuchsen geeigneterweise mehrdeutig kodiert sind, sind die Isolierbuchsen gegenüber der Trennplatte vorteilhafterweise eindeutig kodiert und dabei in diese winkelkodiert eingesetzt. Das Winkelraster beträgt dabei geeigneterweise 45°. Ein spezielle, einer zum Potenzielausgleich dienenden Verbindungs- bzw. Maschinenanschlussleitung zugeordnete Isolierbuchse ist zweckmäßigerweise außerhalb des 45°-Rasters orientiert.

Die kodierte Winkelstellung der Isolierbuchsen bezüglich der Trennplatte bezieht sich hierbei auf eine den Verbindungsleitungen gemeinsame, in den Leitungskanal mündende und zweckmäßigerweise bezogen auf dessen Kanallängsausdehnung außermittige Durchtrittsöffnung im Maschinengehäuse. Mit dem derart gebildeten Kodiersystem lässt sich bei den benötigten verschiedenen Ausrichtungen der Isolierbuchsen gegenüber der Trennplatte eine einheitliche Ausrichtung der an den Anschlussbolzen vorgesehenen, geeigneterweise planen Kontaktflächen zur Trennplatte und damit bezüglich der Maschine verwirklichen.

Die Kontaktflächen der einen Bolzenkopf und einen sich daran anschließenden Bolzenschaft aufweisenden Anschlussbolzen sind am Schaftende vorgesehen, dass aus der Trennplatte auf der dem Leitungskanal abgewandten Plattenoberseite (Plattenaußenseite) herausragt. Die Anschlussbolzen werden hierzu in die Isolierbuchsen derart kodiert eingesteckt, dass die Kontaktflächen geeigneterweise miteinander fluchten und einheitlich parallel zur Plattenlängsseite ausgerichtet sind.

Für eine eindeutige Winkelkodierung der Isolierbuchsen weisen diese geeigneterweise an derselben Position ein vorzugsweise als Axialnut ausgebildetes Kodierelement auf. Dieses korrespondiert mit einem an der Plattenunterseite der Trennplatte vorgesehenen, vorzugsweise als Kodierstift ausgeführten Kodierelement. Die als Axialnut ausgebildeten Kodierelemente der praktisch identischen Isolierbuchsen sind an einem Buchsenkopf am Außenumfang der Isolierbuchse vorgesehen und erstrecken sich dort über einen Teil der Länge des Buchsenkopfes. Die Axialnuten durchsetzen dabei auch einen Anlagekragen, mit dem sich die Isolierbuchse an der Trennplatte auf deren Plattenoberseite abstützt.

An den Buchsenkopf der Isolierbuchsen schließt sich unter Ausbildung des Anlagekragens ein Buchsenhohlschaft an, der mindestens eine Umfangsnut, vorzugsweise jedoch zwei axial beabstandete Umfangsnuten mit darin einliegenden Dichtringen (O-Ringen) zur Kippstabilisierung aufweisen. Da die Axialnut im ebenfalls hohlen Buchsenkopf der Isolierbuchse vorgesehen ist und sich lediglich bis zum Anschlagkragen erstreckt, kollidiert ein in eine entsprechende Passstiftbohrung der Trennplatte eingesetzter Kodierstift nicht mit den schaftseitig die Isolierbuchse umschließenden Dichtringen, wenn der Buchsenschaft der Isolierbuchsen in entsprechenden Durchtrittsöffnungen der Trennplatte dichtend und kippstabilisiert einsitzt.

Analog ist auch der jeweilige Anschlussbolzen gegenüber der entsprechenden Isolierbuchse abgedichtet. Hierzu trägt der Anschlussbolzen wiederum vorzugsweise zwei axial beabstandete Dichtringe, ebenfalls in Form von O-Ringen, die in entsprechenden Umfangsnuten des sich an einen Bolzenkopf anschließenden Bolzenschaftes einliegen. Die Abdichtungen der Isolierbuchsen gegenüber der Trennplatte und der Anschlussbolzen gegenüber den Isolierbuchsen werden zur Erhöhung der Zuverlässigkeit der Dichtwirkung daher jeweils durch zwei statische O-Ringe realisiert, die radial dichtend ausgeführt sind. Dadurch kann gegenüber einer Lösung auf der Basis von axial dichtenden O-Ringen in einfacher Weise ein fester axialer Anschlag realisiert werden, der sicher stellt, dass die Anschlussbolzen bei wechselnden Druckverhältnissen nicht axial arbeiten können. Würden die Anschlussbolzen die auf Grund axial nachgiebiger Dichtungselemente auftretenden druckabhängigen Axialkräfte weiterleiten bzw. würde dies zu axialen Bewegungen der Anschlussbolzen führen, so könnten wechselnde mechanische Spannungen an und in den umrichterseitigen Stromschienen, die mit den Kontaktflächen der Anschlussbolzen kontaktiert werden, die Folge sein. Dies wiederum könnte zur Schädigung der mit den Stromschienen ebenfalls verbundenen Halbleitermodule führen, was zwingend zu vermeiden ist.

Die Isolierbuchsen weisen kopfseitig, d.h. im Bereich des im Montagezustand auf der Innenseite der Trennplatte sich befindenden axialen Überstandes in Form des Buchsenkopfes eine Kragenausnehmung in Form eines radialen Durchbruches auf. Im Montagezustand liegen in diesen Kragenausnehmungen vorzugsweise als Kabelschuhe ausgebildete Anschlusselemente ein, mit denen die Anschlussbolzen auf der Innenseite der Trennplatte mit den dort im Leitungskanal einliegenden Verbindungsleitungen kontaktiert sind. Im Montagezustand sind die Kragenausnehmungen entsprechend der Winkelkodierung bezüglich der Trennplatte in Richtung auf die im Maschinengehäuse vorgesehene und in den Leitungskanal einmündende Durchtrittsöffnung für die Verbindungsleitungen orientiert.

Ebenfalls kopfseitig ist in die Isolierbuchse ein umlaufender radialer Einstich und damit eine Umfangsnut gebildet, durch welche die notwendigen Luft- und Kriechstrecken zur vorzugsweise metallischen Trennplatte auch im Bereich der Kragenausnehmungen der Isolierbuchsen sichergestellt sind. Des Weiteren weisen die Isolierbuchsen stirnseitig am im Montagezustand die Trennplatte innenseitig axial überragenden Buchsenkopf - und dort innenseitig - eingezogene Kodierausnehmungen auf, in die am Anschlussbolzen kopfseitig vorgesehene Kantenbereiche der Winkelorientierung entsprechend eingreifen.

Zur Kontaktierung der mit den Leitungsenden der Verbindungsleitungen verbundenen Kabelschuhe mit den Anschlussbolzen weisen diese auf der Stirnseite des im Montagezustand auf der Innenseite der Trennplatte befindlichen Bolzenkopfes eine Sackloch-Gewindebohrung (Innengewindebohrung) für eine Fixierschraube zur Schraubkontaktierung der jeweiligen Verbindungsleitungen bzw. der mit deren Leitungsenden verbundenen Kabelschuhe auf.

Der an dieser Stelle der radialen Ausleitung des jeweiligen Kabelschuhs aus der Kragenausnehmung unterbrochene Isolierkragen dient dazu, die erforderlichen Luft- und Kriechstrecken vom Anschlussbolzen, dem Kabelschuh und der Fixierschraube auf eine in diesem Bereich direkt benachbart zu den Isolierbuchsen befindliche Wandung des Motorgehäuses sicherzustellen. Durch die Kodierung und die damit verbundene eindeutige Orientierung dieser Kragenausnehmungen der Isolierbuchsen gegenüber der Trennplatte ist zuverlässig verhindert, dass die Iso-lierbuchsen bei der Montage fälschlicherweise derart verdreht werden können, dass die erforderlichen Luft- und Kriechstrecken zur Gehäusewandung unterschritten werden.

In einer bevorzugten Ausführungsform ist die Kodierung der Anschlussbolzen gegenüber den Isolierbuchsen dadurch realisiert, dass die Isolierbuchsen in einer kopfseitigen Stufe stirnseitig eine Ausfräsung aufweisen, die zwei um 45 ° gegen-einander verdrehten Quadraten entspricht. Die Anschlussbolzen weisen kopfseitig einen an die quadratischen Aussparungen bzw. Ausfräsungen angepassten Vier-kantbereich auf. Dies ermöglicht eine insgesamt 8-fache und damit mehrdeutige Kodierung der Anschlussbolzen gegenüber den Isolierbuchsen. Zur Fertigung dieser Kodierausnehmungen, insbesondere durch Fräsen, sind in den Ecken geeigneterweise Ausrundungen vorgesehen. In diese Ausfräsungen greifen die Anschlussbolzen mittels deren quadratischen Vierkantbereiches ein. Die erforderlichen Eckenausrundungen der Ausfräsungen werden auf der Seite des jeweiligen Anschlussbolzens dadurch freigestellt, dass der quadratische Vierkantbereich radial außen durch eine zylindrische Hüllfläche begrenzt ist. Hierdurch kann ein Rohmaterial mit vergleichsweise kleinem Durchmesser eingesetzt werden.

Während der Bolzenschaft des Anschlussbolzens in beliebiger Drehorientierung gegenüber der Isolierbuchse in diese eingesteckt werden kann, ist der kopfseitige Vierkantbereich des Anschlussbolzens lediglich in acht Winkelpositionen in die gefrästen Kodierausnehmungen der Isolierbuchse einsetzbar. Hierdurch ist es möglich, die Isolierbuchse selbst gegenüber der Trennplatte in acht verschiedenen diskreten Winkelpositionen anzuordnen, um eine einheitliche Ausrichtung der schaftseitigen Kontaktflächen der Anschlussbolzen gegenüber der Trennplatte zu erzielen.

Die Isolierbuchsen und die Anschlussbolzen sind derart ausgeführt, dass diese jeweils von der im Montagezustand druckbeaufschlagten Innenseite der Trennplatte aus eingesteckt werden können. Dabei schlagen entsprechende Buchsen- bzw. Bolzenbunde axial an, so dass einerseits die Isolierbuchsen gegenüber der Trennplate und andererseits die Anschlussbolzen gegenüber den Isolierbuchsen axial eindeutig positioniert sind. Auf der dem Leitungskanal für die Aufnahme der Anschlussleitungen gegenüberliegenden Plattenaußen- oder oberseite der Isolier-platte werden die Anschlussbolzen und die Isolierbuchsen lediglich durch Außensicherungsringe fixiert. Somit können weder die Isolierbuchsen gegenüber der Trennplatte noch die Anschlussbolzen gegenüber den Isolierbuchsen in Richtung des Leitungskanals zurück gedrückt werden. Zur Aufnahme dieser Außensicherungsringe ist einerseits in den die Trennplatte plattenaußenseitig überragenden Buchsenschaft der Isolierbuchsen sowie andererseits in den aus diesem wiederum herausragenden Bolzenschaft der Anschlussbolzen jeweils eine Umfangsnut eingebracht. Während des Betriebs der elektrischen Maschine sind diese Außensicherungsringe auf Grund der unterschiedlichen Druckverhältnisse auf der Platteninnenseite und der Plattenaußenseite der Trennplatte axial kräftefrei.

Die Abdichtung der Anschlussbolzen gegenüber den Isolierbuchsen sowie deren Abdichtung gegenüber der Trennplatte erfolgt jeweils durch zwei radial dichtende O-Ringe. Zur einfachen Fertigung und Montage sind die erforderlichen radialen Umfangsnuten stets als Außeneinstiche in die Anschlussbolzen einerseits und in die Isolierbuchsen andererseits ausgeführt. Aufgrund der doppelten Ausführung der O-Ringe wird zusätzlich zur höheren Sicherheit gegen Leckagen durch den radialen elastischen Kraftangriff an jeweils zwei unterschiedlichen axialen Positionen eine koaxiale Selbstausrichtung der Zylindermantelflächen der bolzen- und buchsenseitigen Dichtbereiche zueinander unabhängig von den temperaturabhängig schwankenden Passungstoleranzen erreicht.

Das Maschinengehäuse der elektrischen Maschine weist in vorteilhafter Ausgestaltung eine Montageplattform auf. Die Montageplattform wird zweckmäßigerweise mittels eines haubenartigen Gehäuses verschlossen, das nach Art eines Klemmenkastens lediglich Anschlusselemente oder auch eine vergleichsweise komplexe Elektronik, beispielsweise Umrichterbauelemente, aufnimmt. Das Gehäuse dichtet die Montageplattform (als trockene Schnittstelle) nach außen ab. Hierzu bildet die Montageplattform, die bei einem zylinderförmigen Maschinenge-häuse tangential ausgerichtet ist, eine umlaufende und beispielsweise im Wesentlichen rechteckförmige Dichtfläche. Innerhalb der Montageplattform befinden sich geeigneterweise auch Ein- und Austrittsöffnungen für das Kühlmedium. Diese können als Stutzen oder Rohre ausgeführt sein, die mit Fluidkammern oder - kanälen innerhalb des Maschinengehäuses in Verbindung stehen.

Die Montageplattform ist somit geeigneterweise praktisch integraler Bestandteil des Maschinengehäuses und insbesondere im Falle eines zylindrischen Maschinengehäuses durch einen beispielsweise rechteckförmigen Plattformrahmen gebildet, der stoffschlüssig, insbesondere durch Verschweißen, oder auch einteilig an die Gehäusewandung des Maschinengehäuses außenseitig angebunden ist. Eine derart ausgebildete Montageplattform an einem zylindrischen Maschinengehäuse bildet an gegenüberliegenden Gehäuselängsseiten jeweils einen Gehäusezwickel aus. Dieser Gehäusezwickel wird vorteilhafterweise als den Leitungskanal bildender Raum genutzt, um dort die Verbindungsleitungen bzw. Maschinenanschlüsse einzulegen.

Die mit der Erfindung erzielten Vorteile bestehen insbesondere darin, dass durch die erfindungsgemäße Kodierung der Anschlussbolzen gegenüber den diese aufnehmenden Isolierbuchsen eine einheitliche Ausrichtung der Anschlussbolzen sichergestellt werden kann. Da vorzugsweise auch die Isolierbuchsen gegenüber der Trennplatte kodiert sind, können diese mit eindeutigen, jedoch verschiedenen Winkelkodierungen in die Trennplatte eingebaut und gleichzeitig eine einheitliche Ausrichtung der darin angeordneten Anschlussbolzen sichergestellt werden.

Die aus Metall bestehende Trennplatte mit den darin eingesetzten, vorzugsweise aus Kunststoff bestehenden Isolierbuchsen und den wiederum metallischen Anschlussbolzen eignet sich als Anschlussdurchführung besonders für einen elektrischen Motor oder Generator mit direkt ölgekühlter Statorwicklung und druckdichter Durchführung der elektrischen Anschlüsse, um den Motor bzw. Generator elektrisch mit einem Umrichter verbinden zu können. Das Kodiersystem zwischen den Isolierbuchsen und der Trennplatte einerseits sowie den Anschlussbolzen und den Isolierbuchsen andererseits ermöglicht eine einheitliche Orientierung der Kontaktflächen der Anschlussbolzen in einem vorbestimmten Winkel zur Trennplatte und damit zur elektrischen Maschine.

Die vorbestimmte, jedoch bei den einzelnen Isolierbuchsen verschiedene diskrete Werte annehmende Winkelkodierung der Isolierbuchsen gegenüber der Trennplatte dient nicht nur zur Einhaltung der Luft- und Kriechstrecken. Vielmehr dient diese Winkelkodierung der Isolierbuchsen auch zur vereinfachten Montage durch eine gezielt orientierte Verlegung der Verbindungsleitungen innerhalb des Leitungskanals und deren endseitige Kontaktierung in Form von durch entsprechend geeignete Ausmündung der Isolierbuchsen hindurch zu den Anschlussbolzen geführten Kabelschuhen an den Leitungsenden der Verbindungsleitungen.

Auf Grund der hohen radialen Dichtwirkung der Dichtelemente zwischen der Trennplatte und den Isolierbuchsen einerseits sowie zwischen diesen und den Anschlussbolzen andererseits ist der Maschineninnenbereich auf der einen Seite der Trennplatte vom Maschinenaußenbereich auf der anderen Seite der Trennplatte zuverlässig druckdicht abgeschlossen. Dabei ist sowohl der Dichtbereich als auch der Kodierbereich der Trennplatte mit den eingesetzten Isolierbuchsen und den darin wiederum eingesteckten Anschlussbolzen axial und radial besonders kompakt aufgebaut. Die Plattendicke der Trennplatte ist hierbei schon aus Kosten- und Bauraumgründen an die für die Druckbeanspruchung und die elementare Unterbringung der Abdichtung erforderlichen Anforderungen angepasst. Zudem sind die Geometrie und die Ausgestaltung der Isolierbuchsen einerseits sowie der Anschlussbolzen andererseits hinsichtlich einer möglichst kostengünstigen Fertigung ausgeführt.

Das Kodiersystem mit der eindeutigen Kodierung der Isolierbuchsen zur Trennplatte sowie einer mehrdeutigen Winkelorientierung der Anschlussbolzen gegenüber den Isolierbuchsen ermöglicht eine Anordnung, bei der sich die räumlichen Wirkungsbereiche der Winkelkodierung der Isolierbuchsen gegenüber der Trennplatte und der Abdichtung der Isolierbuchsen gegenüber der Trennplatte dadurch axial überlappen können, dass diese radial auf verschiedenen Durchmessern angeordnet sind. Hierdurch ist es möglich, die Trennplatte relativ dünnwandig auszuführen, um auf diese Weise axialen Bauraum einzusparen. Die Bauräume der Kodierung der Anschlussbolzen zu den Isolierbuchsen und der Isolierbuchsen zur Trennplatte überlappen sich zur Minimierung der Gesamtbaulänge ebenfalls axial und sind wiederum dadurch getrennt, dass die Wirkbereich auf verschiedenen Teilkreisen liegen.

Um den Durchmesser der Anordnung zu minimieren und dabei an jeder Stelle längs des Bolzens einen ausreichenden Materialquerschnitt zum Leiten des Stroms zu gewährleisten, wird die Abdichtung der Anschlussbolzen gegenüber den Isolierbuchsen axial versetzt zu einem Innen- oder Sackloch-Gewinde stirnseitig im Anschlussbolzen angeordnet. Das Sackloch-Gewinde wird benötigt, um die Verbindungsleitungen der Maschine auf der Maschineninnenseite der Trennplatte zu befestigen. Der Abdichtbereich ist hierzu derart angeordnet, dass dieser axial keinen Bauraum außerhalb des axialen Überstandes der Isolierbuchsen gegenüber der Trennplatte im Außenbereich beansprucht, der ohnehin zur Einhaltung der notwendigen Luft- und Kriechstrecken erforderlich ist. Die räumliche Verschachtelung der Kodier- und Dichtbereiche ermöglicht zudem einen besonders kompakten Aufbau.

Die eindeutige Winkelkodierung der Isolierbuchsen stellt sicher, dass die erforderlichen Luft- und Kriechstrecken auf der Innenseite der Trennplatte gegenüber dem Maschinengehäuse nicht durch Fehlmontagen unterschritten werden können. Gleichzeitig ist eine einheitliche Winkelausrichtung der seitlichen Kontaktbereiche der Anschlussbolzen in Form deren Kontaktflächen gegenüber der Trennplatte ermöglicht, obwohl die Isolierbuchsen, in denen die Anschlussbolzen angeordnet sind, in deren Endmontagezustand innerhalb der Trennplatte verschiedene diskrete Winkelorientierungen aufweisen.

Die erfindungsgemäße elektrische Maschine mit dem erfindungsgemäßen Maschinengehäuse ist geeigneterweise ein Motor oder Generator mit einer Leistung im Bereich zwischen 1kW und 1000kW, insbesondere 2kW bis 500kW, vorzugsweise 3kW bis 200KW, beispielsweise 100kW bis 140kW, der zweckmäßigerweise als motorisch oder generatorisch arbeitender Antrieb für ein Aggregat eines insbesondere mobilen Nutzfahrzeugs eingesetzt wird.

Nachfolgend werden Ausführungsbeispiele der Erfindung anhand einer Zeichnung erläutert. Darin zeigen:
- Fig. 1: in einem Längsschnitt eine elektrische Maschine mit einem Maschinengehäuse mit einem Leitungskanal und darin angeordneten Anschlüssen sowie Verbindungsleitungen,
- Fig. 2: die elektrische Maschine gemäß Fig. 1 in einer perspektivischen Draufsicht,
- Fig. 3: in perspektivischer Darstellungen die elektrische Maschine gemäß Fig. 1 mit über eine Schmalseite aufgeschwenkter Trennplatte,
- Fig. 4: in Draufsicht die Trennplatte mit darin in verschiedenen Winkelpositionen eingesetzten Isolierbuchsen mit eingesteckten Anschlussbolzen,
- Fig. 5: die Trennplatte in perspektivischer Darstellung mit Blick auf die Plattenoberseite (Plattenaußenseite),
- Fig. 6: die Trennplatte ohne Isolierbolzen mit Blick auf die Plattenunterseite (Platteninnenseite),
- Fig. 7: teilweise perspektivisch eine Querschnittsdarstellung entlang einer in die Trennplatte eingesetzten Isolierbuchse mit eingestecktem Anschlussbolzen,
- Fig. 8 und 9: die Isolierbuchse in einer perspektivischen Seiten- bzw. Stirnansicht,
- Fig. 10 und 11: den Anschlussbolzen in perspektivischer Darstellung mit bzw. ohne schraubkontaktiertem Kabelschuh und Außensicherungsring,
- Fig. 12: in perspektivischer Darstellung die elektrische Maschine mit integrierter Leistungselektronik, und
- Fig. 13: in perspektivischer Darstellung die elektrische Maschine gemäß Fig. 12 mit vom Maschinengehäuse abgehobenem Elektronikgehäuse.

Einander entsprechende Teile sind in allen Figuren mit den gleichen Bezugszeichen versehen.

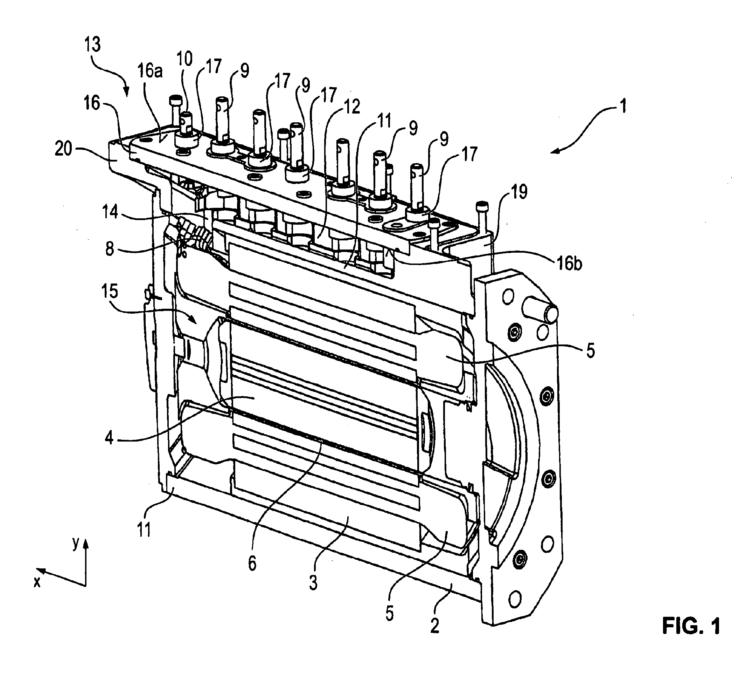

Die Fig. 1 bis 3 zeigen eine beispielsweise sechsphasige elektrische Maschine 1 mit einem Maschinengehäuse 2, in dem ein Stator 3 und ein Rotor 4 angeordnet sind. Der Stator 3 trägt Spulenwicklungen (Statorwicklungen) 5 und ist z. B. mittels eines Spaltrohres 6 zu dessen Kühlung mittels eines geeigneten Fluids, insbesondere Öl, hermetisch gegenüber dem Rotor 4 innerhalb des Maschinengehäuses 2 abgedichtet. Der in nicht näher dargestellter Art und Weise mit Permanentmagneten versehene Rotor 4 sitzt auf einer im Maschinengehäuse 2 gelagerten und stirnseitig aus dieser herausgeführten Welle 7. Die Statorwicklungen 5 sind über Verbindungsleitungen 8 mit als Maschinenanschlüssen (Phasenanschlüsse) dienenden Anschlussbolzen 9 zur elektrischen Kontaktierung mit den Wicklungen 5 verbunden. Ein weiterer Anschlussbolzen 10, der ebenfalls über eine Verbindungsleitung 8 zum Stator 3 geführt ist, dient zum Potenzialausgleich.

An einer Gehäusewandung 11 des Maschinengehäuses 2 ist außenseitig ein Leitungskanal 12 vorgesehen. Der Leitungskanal 12 erstreckt sich - gemäß dem dargestellten kartesischen Koordinatensystem - in Gehäuselängsrichtung (Axialrichtung) x. In diesem Leitungskanal 12 liegen die Verbindungsleitungen 8 ein. In den Leitungskanal 12 mündet an einer dessen Längsenden 13 eine Durchtrittsöffnung 14 ein, die in die Gehäusewandung 11 des Maschinengehäuses 12 an der entsprechenden Stelle eingebracht ist. Im Bereich dieser Durchtrittsöffnung 14 sind die Verbindungsleitungen 8 etwa oder im Wesentlichen rechtwinklig abgebogen. Die Durchtrittsöffnung 14 und der Leitungskanal 12 verlaufen zueinander im Wesentlichen senkrecht. Somit sind die Verbindungsleitungen 8 aus dem Innenraum (Maschineninnenraum) 15 des Maschinengehäuses 2 über die Durchtrittsöffnung 14 gehäuseintern geführt und in den Leitungskanal 12 umgebogen.

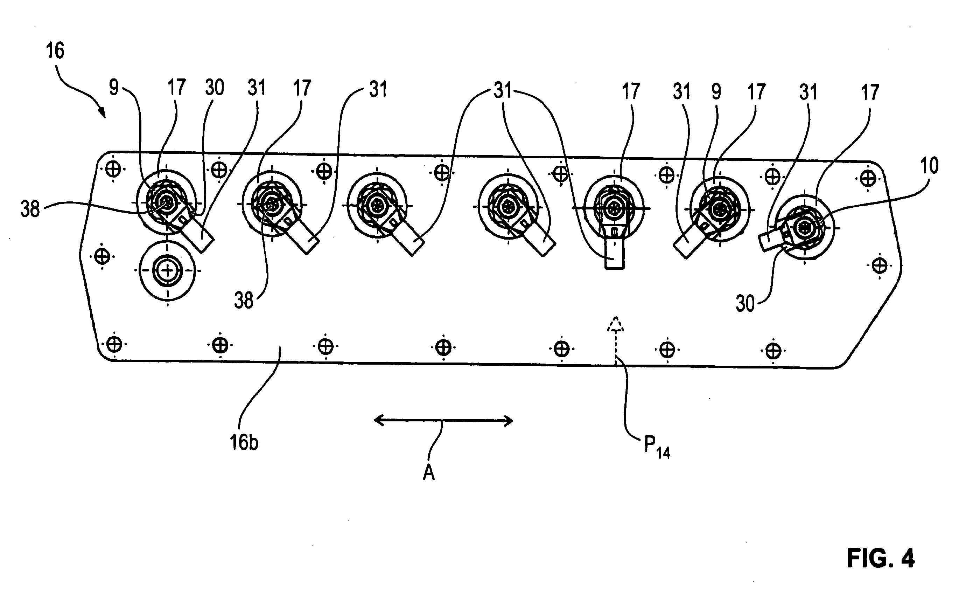

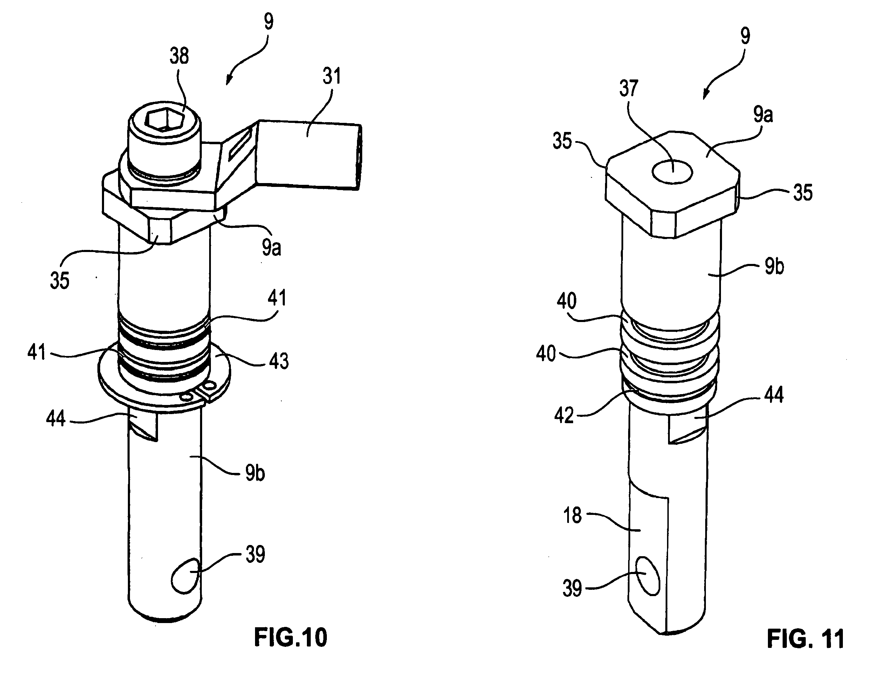

Der Leitungskanal 12 ist mittels einer aus Metall, insbesondere aus Aluminium oder Edelstahl bestehenden Trenn- oder Montageplatte 16 an der der Gehäusewandung 11 gegenüber liegenden Außenseite abgedeckt. In die Trennplatte 16 sind Isolierbuchsen 17, die insbesondere aus Kunststoff gefertigt sind, eingesetzt. In diese wiederum sind die Anschlussbolzen 9, 10 eingesteckt. Diese sind an die Leitungsenden der Verbindungsleitungen 8 rechtwinklig verlaufend und elektrisch leitend angebunden und hierzu insbesondere über Kabelschuhe (Fig. 4 und 10), Crimpösen oder dergleichen mit den Verbindungsleitungen 8 verschraubt. Die Anschlussbolzen 9, 10 ragen auf der dem Leitungskanal 12 abgewandten Plattenober- oder -außenseite 16a der Trennplatte 16 aus dieser heraus und bilden dort Kontaktflächen 18 aus. Die Trennplatte 16, deren Plattenunterseite 16b dem Leitungskanal 12 und dem Maschineninnenraum 15 zugewandt ist, verschließt den Leitungskanal 12 druckdicht und bildet eine elektrische und/oder mechanische Schnittstelle zu einer nicht dargestellten Leistungs- bzw. Umrichterelektronik.

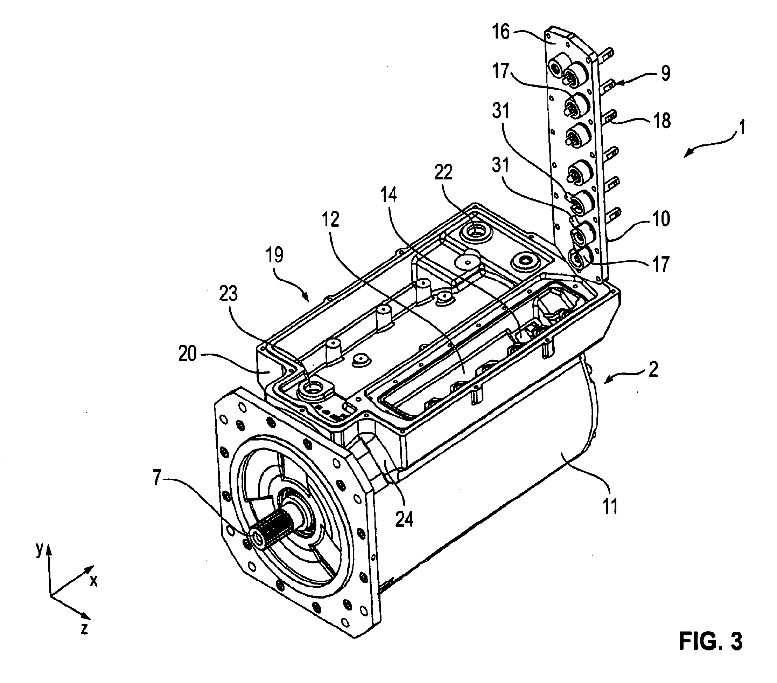

Wie aus Fig. 3 vergleichsweise deutlich ersichtlich ist, ist der Leitungskanal 12 (integraler) Bestandteil einer Montageplattform 19. Diese ist bei dem im Ausführungsbeispiel zylinderförmigen Maschinengehäuse 2 tangential orientiert und liegt gemäß dem dargestellten Koordinatensystem in der xz-Ebene. Die Montageplattform 19 ist im Wesentlichen von einem Gehäuserahmen 20 gebildet, der umfangsseitig geschlossen und stoffschlüssig oder einteilig an das zylindrische Maschinengehäuse 2 bzw. dessen Gehäusewandung 11, beispielsweise durch Verschweißen, angebunden ist.

Die Maschinenplattform 19 bzw. deren Gehäuserahmen 20 bildet eine umfangsseitig geschlossene Dichtfläche oder Dichtkante 21. Innerhalb der von der Dichtfläche 21 umschlossenen Montageplattform 19 befinden sich der Leitungskanal 12 sowie - außerhalb des Leitungskanals 12 - Kühlmittelaus- bzw. Kühlmitteleinlässe (Kühlmittelstutzten oder -rohre) 22, 23. Diese münden in den Maschineninnenraum 15 bzw. aus diesem in die Montageplattform 19. Der Gehäuserahmen 20 und die Montageplattform 19 sowie der Leitungskanal 12 sind aufgrund dieser Konstruktion somit praktisch integraler Bestandteil des Maschinengehäuses 2.

Aufgrund der konstruktiven Anbindung der Montageplattform 19 mit deren Gehäuserahmen 20 an die zylindrische Gehäusewandung 11 des Maschinengehäuses 2 ist zwischen der Gehäusewandung 20 und der Montageplattform 19 ein Gehäusezwickel 24 gebildet. Dieser ist somit ebenfalls integraler Gehäusebestandteil des Maschinengehäuses 2. In diesem Gehäusezwickel 24 ist ein ausreichend großes Bauraumvolumen für den Leitungskanal 12 bereitgestellt, so dass dort auch bei einer dreiphasigen elektrischen Maschine 1 die dadurch erforderliche Anzahl von Verbindungsleitungen 8 raumsparend einliegen kann. Dies ermöglicht insgesamt eine besonders kompakte Bauweise des Maschinengehäuses 2 und damit der elektrischen Maschine 1 bei gleichzeitig hoher Flexibilität.

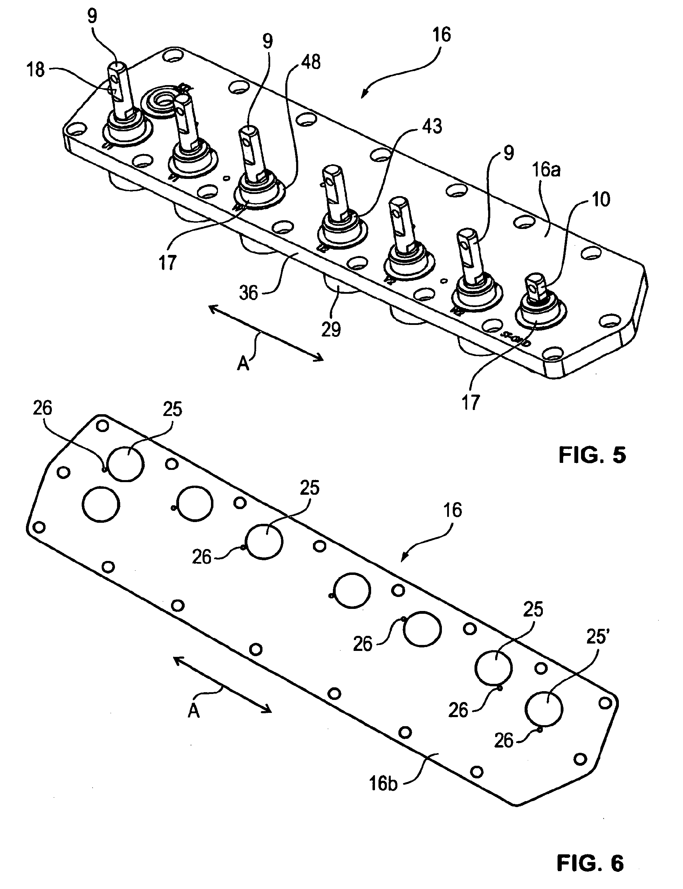

Die in Fig. 3 beispielhaft schmalseitig aufgeklappte (verschwenkte) Trennplatte 16 ermöglicht eine montagefreundliche Verlegung der Verbindungsleitungen 8 innerhalb des Leitungskanals 12 sowie ein einfach handhabbares und zuverlässiges Durchstecken der Isolierbuchsen 17 sowie der Anschlussbolzen 9, 10 durch die zugehörigen Durchgangsöffnungen (Fig. 6) in der Trennplatte 16. Die Verbindungsleitungen (Maschinenanschlusskabel oder -leitungen) 8 sind als zu Isolationszwecken ummantelte Litzenleitung mit insbesondere bei einer hohen Maschinenleistung großem Leiterquerschnitt von 10mm² bis 70mm² ausgeführt.

Die Figuren 4 bis 6 zeigen die aus Metall bestehende Trennplatte 16 mit bzw. ohne darin eingesetzten Isolierbuchsen 17 sowie darin wiederum eingesteckten Anschlussbolzen 9, 10. Die Figuren 4 und 6 zeigen dabei die Trennplatte 16 mit Blick auf deren Plattenunterseite 16b, die im Montagezustand dem Leitungskanal 12 zugewandt ist. Fig. 5 zeigt hingegen die Trennplatte 16 mit Blick auf deren Plattenober- oder Plattenaußenseite 16a. Die Trennplatte 16 weist eine der Anzahl der Isolierbuchsen 17 sowie der diesen zugeordneten Anschlussbolzen 9, 10 entsprechende Anzahl von Stecköffnungen 25, 25' auf, von denen die Stecköffnung 25', die der den Anschlussbolzen 10 für den Potentialausgleich aufnehmenden Isolierbuchse 17 zugeordnet ist, geringfügig aus der Fluchtlinie der anderen Stecköffnungen 25 zurückversetzt ist.

Bei den nachfolgenden Ausführungen wird der Einfachheit halber lediglich auf den Anschlussbolzen 9 und die Stecköffnungen 25 Bezug genommen, während der gleichartige Anschlussbolzen 10 sowie die gleichartige Stecköffnung 25' nur bei abweichenden Details explizit angeführt wird.

Erkennbar ist jeder Stecköffnung 25 und damit jeder darin gemäß den Fig. 4 und 5 eingesetzten Steckbuchsen 17 eine Kodieröffnung 26 in Form einer Sacklochbohrung zugeordnet. Die als plattenseitige Kodierelemente dienenden Kodieröffnungen 26 sind umfangsseitig der jeweiligen Stecköffnung 25 teilweise an gleichen und teilweise an unterschiedlichen Positionen zugeordnet. Die Kodieröffnungen 26 sind zudem möglichst nahe am Öffnungsrand der jeweiligen Stecköffnung 25 angeordnet.

Erkennbar sind von den insgesamt sieben Stecköffnungen 25, 25' die in Fig. 6 ersten vier Öffnungen 25 von links in einem Winkel von (-)45° bezogen auf die dargestellte Plattenlängsachse A positioniert, während sich die Kodieröffnung 25 der daran anschließenden Stecköffnung 26 diesbezüglich an der 0°-Position befindet. Die Position der Kodieröffnung 26 der der Stecköffnung 25' benachbarten Stecköffnung 25 befindet sich bezogen auf die Plattenlängsachse A an der (+)45°-Position. Somit ergibt sich für die Kodieröffnungen 26 dieser sechs Stecköffnungen 25 ein 45°-Raster. Hiervon weicht lediglich der der Stecköffnung 25' zugeordnete Kodieröffnung 26 ab, deren Winkel außerhalb des 45°-Rasters liegt.

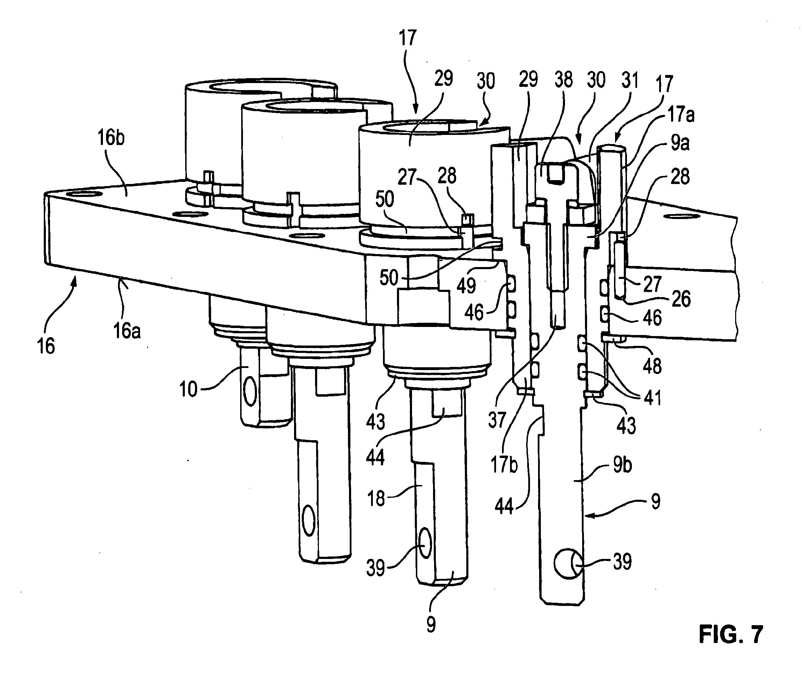

Wie aus Fig. 7 ersichtlich ist, nehmen die plattenseitigen Kodieröffnungen 26 jeweils einen Kodierstift 27 auf, die an der Plattenunterseite 16b der Trennplatte 16 aus dieser herausragen. Bei in die jeweilige Stecköffnung 26, 26' eingesetzter Isolierbuchse 17 greift der jeweilige Kodierstift 27 in eine buchsenseitige Kodiernut 28 ein, die sich außenseitig in Längsrichtung der Isolierbuchse 17 über einen Teil dessen Buchsenkopfes 17a erstreckt.

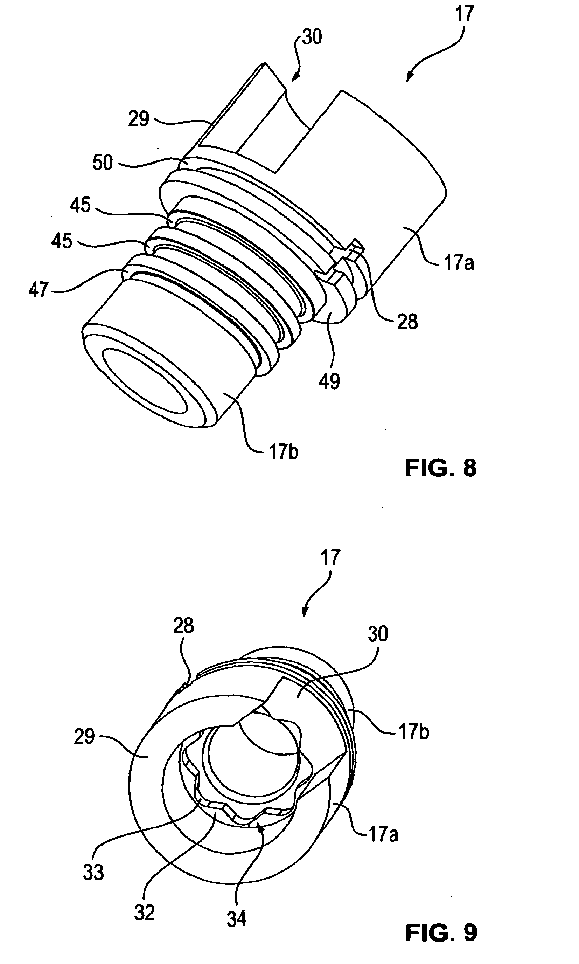

Wie insbesondere Fig. 8 zeigt, befindet sich die Kodiernut 28 als buchsenseitiges Kodierelement am Außenumfang 5 des Buchsenkopfes 17a, mit dem die Isolierbuchse 17 an der Platteninnenseite 16b aus der Trennplatte 16 heraus und in den Leitungskanal 12 hineinragt. Kopfseitig bildet die Isolierbuchse 17 einen Buchsenoder Isolierkragen 29 aus. In diesen ist eine stirnseitig offene, etwa U-förmige Kragenausnehmung 30 eingebracht. In eingesteckter Montageposition greift der plattenseitige Kodierstift 27 in die buchsenseitige Kodiernut 28 ein. Abhängig von derjenigen Stecköffnung 25, 25', in welche die identischen Isolierbuchsen 17 eingesteckt sind, ist die Orientierung der Kragenausnehmung 30 und damit deren Winkelposition bezüglich der Trennplatte 16 bzw. deren Plattenlängsrichtung A bestimmt.

Demzufolge sind im Montageendzustand gemäß Fig. 4 die Isolierbuchsen 17 gegenüber der Trennplatte 16 winkelkodiert in diese eingesteckt. Die Winkelorientierung der Kragenausnehmungen 30 der Isolierbuchsen 17 ist hierbei einerseits möglichst optimal auf die in Fig. 4 veranschaulichte Position P₁₄ der sich unterhalb der Trennplatte 16 befindenden Durchtrittsöffnung 14 im Leitungskanal 12 des Maschinengehäuses 2 ausgerichtet. Hierdurch ist nur eine möglichst geringe Biegung der einzelnen, über die gemeinsame Durchtrittsöffnung 14 in den Leitungskanal 12 geführten Verbindungsleitungen 8 erforderlich, um diese an die Anschlussbolzen 9, 10 zu führen. Andererseits gewährleistet diese Winkelpositionierung bzw. -orientierung der Isolierbuchsen 17 und deren Kragenausnehmungen 30 die Einhaltung der erforderlichen Luft- und Kriechstrecken.

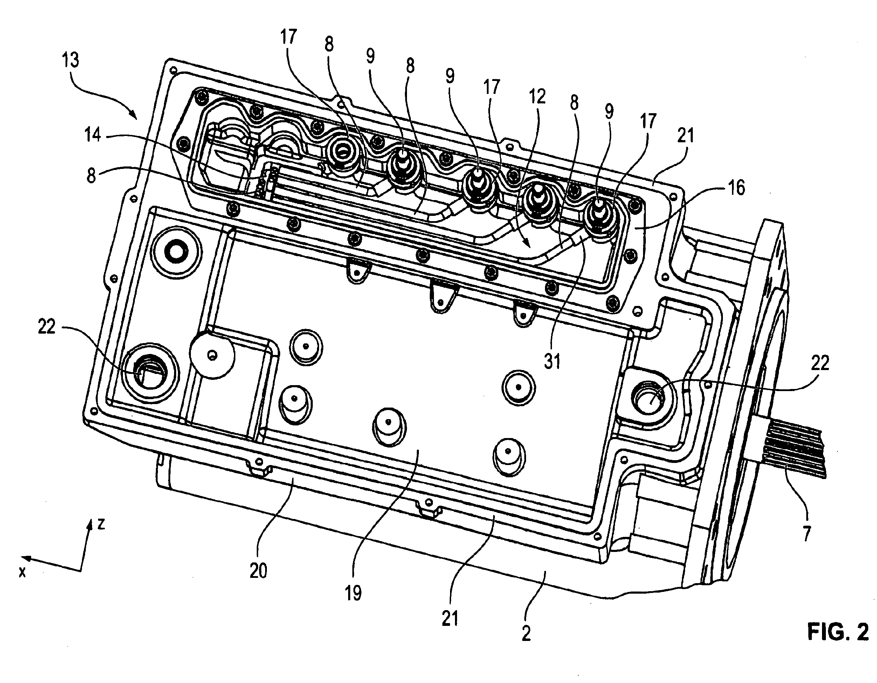

Wie anhand der Figuren 4 und 7 vergleichsweise deutlich ersichtlich ist, durchgreifen mit den Anschlussbolzen 9 kontaktierte Kabelschuhe 31 die jeweilige Kragenöffnung 30 der Isolierbuchsen 17. Aus Fig. 2, in der die Trennplatte 16 transparent dargestellt ist, ist erkennbar, dass die Kabelschuhe 31 mit den Leitungsenden der Verbindungsleitungen 8 mechanisch und elektrisch leitend verbunden sind. Insbesondere in Fig. 4 erkennbar ist auch das 45°-Raster der Kodierung bzw. Orientierung der Kragenöffnungen 30 und damit der durch diese hindurchgeführten Kabelschuhe 31. Lediglich diejenige Isolierbuchse 17, die dem für den Potentialausgleich vorgesehenen Anschlussbolzen 10 zugeordnet ist, weicht im Ausführungsbeispiel von diesem 45°-Raster ab.

Während die Winkelkodierung der Isolierbuchsen 17 gegenüber der Trennplatte 16 durch die vorbestimmte Position des jeweiligen Kodierstiftes 27 am Umfang der Stecköffnungen 25 der Trennplatte 16 eindeutig bestimmt ist, können die Anschlussbolzen 9 in insgesamt acht unterschiedlichen Winkelpositionen und somit kodiert in die jeweilige Isolierbuchse 17 eingesetzt werden. Somit ergibt sich für die mehrdeutige Kodierung der Anschlussbolzen 9, 10 gegenüber der jeweiligen Isolierbuchse 17 ebenfalls ein 45°-Raster.

Wie in Fig. 9 gezeigt, weist hierzu jede der hohlzylindrischen Isolierbuchsen 17 kopfseitig eine eingezogene Stufe 32 auf, in die insgesamt acht etwa V-förmige, beispielsweise gefräste Kodierkonturen 33 eingebracht sind, die in ihrer Gesamtheit eine sternförmige Kodierausnehmung 34 bilden. Diese sternförmige Kontur der Kodierausnehmung 34 besteht aus zwei um 45° gegeneinander verdrehte, etwa quadratische Ausfräsungen. Dabei sind die Ecken dieser quadratischen Ausfräsungen unter Bildung der etwa V-förmigen Kodierkonturen 33 ausgerundet.

In diese Kodierausnehmung 34 des Isolierbolzens 17 greift ein entsprechend quadratisch ausgebildeter Bolzenkopf 9a des Anschlussbolzens 9 ein. Dabei ist der quadratische Vierkantbereich des Bolzenkopfes 9a in dessen Eckbereichen 35 derart abgefasst oder abgerundet, dass die erforderlichen Eckenausrundungen der Kodierkonturen (Ausfräsungen) 33 auf Seiten der Anschlussbolzen 9 freigestellt ist. Der kopfseitig quadratische Vierkantbereich der Anschlussbolzen 9 ist hierzu radial außen durch eine zylindrische Hohlfläche begrenzt. Aufgrund dieser kopfseitig im Wesentlichen quadratischen Ausgestaltung der Anschlussbolzen 9 sowie der sternförmigen Kodierausnehmung 34 der Isolierbuchse 17 lässt sich der Anschlussbolzen 9 in insgesamt acht Winkelpositionen gegenüber der Isolierbuchse 17 in diese einstecken. Dabei nimmt der jeweilige Anschlussbolzen 9, 10 gegenüber der Isolierbuchse 17 im Montagezustand diejenige Winkelposition ein, in der die schaftendseitig am Anschlussbolzen 9, 10 vorgesehene plane Kontaktfläche 18 parallel zur Plattenlängskante 36 der Trennplatte 16 derart ausgerichtet ist, die Kontaktflächen 18 aller Anschlussbolzen 9, 10 miteinander fluchten, wie dies insbesondere in Fig. 5 ersichtlich ist.

Kopfseitig und dabei von der Stirnseite des Anschlussbolzens 9 her zugänglich ist in diesen eine Innengewinde- oder Sackloch-Gewindebohrung 37 eingebracht. Gemäß Fig. 10 wird in diese Gewindebohrung 37 eine Fixierschraube 38 zur Klemmkontaktierung des Kabelschuhs 31 und damit zur elektrisch leitenden Verbindung der Verbindungsleitungen 8 mit den Anschlussbolzen 9, 10 eingeschraubt. Die radiale Orientierung des Kabelschuhs 31 gegenüber dem jeweiligen Anschlussbolzen 9, 10 ist dabei bestimmt durch die Position bzw. Lage der Kragenausnehmung 30 der jeweiligen Isolierbuchse 17 und damit deren Winkelkodierung gegenüber der Trennplatte 16. Die Verbindungsleitungen 8 sowie die Kabelschuhe 31 verlaufen im Montagezustand im Wesentlichen rechtwinklig zu den Anschlussbolzen 9, 10.

Gemäß den Figuren 7, 10 und 11 schließt sich an den Bolzenkopf 9a der Anschlussbolzen 9 ein Bolzenschaft 9b an, an dessen Schaftende die plane Kontaktfläche 18 vorgesehen ist. Dort ist eine Gewindebohrung oder Schrauböffnung 39 eingebracht. Diese dient zur Kontaktierung der Anschlussbolzen 9 mit beispielsweise einer Stromschiene einer nicht näher dargestellten Elektronik, z. B. eines Umrichters. Im Bereich zwischen dem Bolzenkopf 9a und der Kontaktfläche 18 sind in den Bolzenschaft 9b zwei axial beabstandete Umfangsnuten 40 zur Aufnahme von Dichtringen 41 (O-Ringe) eingebracht. Eine weitere, in Richtung der Kontaktfläche 18 unterhalb dieser Umfangsnuten 40 vorgesehene Umfangsnut 42 dient zur Aufnahme eines Außensicherungsringes 43. Mit diesem Außensicherungsring 43 wird der in die Isolierbuchse 17 dichtend und aufgrund der zwei axial übereinander angeordneten Dichtringe (O-Ringe) 41 kippstabilisierte Anschlussbolzen 9, 10 gegen eine Axialverschiebung gegenüber der Isolierbuchse 17 axial gesichert. Zwischen der Umfangsnut 42 für den Außensicherungsring 43 und der Kontaktfläche 18 befindet sich im Bolzenschaft 9b des Anschlussbolzens 9 eine Schlüsselfläche 44 für ein Handhabungswerkzeug in Form eines Maulschlüssels als Gegenhalt beim Anziehen der Fixierschraube 38.

Analog ist gemäß den Fig. 7 bis 10 auch die Isolierbuchse 17 radial dichtend und kippstabilisiert in die jeweilige Stecköffnung 25 der Trennplatte 16 eingesteckt. Hierzu weist die Isolierbuchse 17 in deren sich an den Buchsenkopf 17a anschließenden Buchsenschaft 17b wiederum radial beabstandete Umfangsnuten 45 auf, in die wiederum Dichtringe oder-element 46 in Form von O-Ringen eingesetzt sind. In Richtung des Schaftendes der Isolierbuchse 17 ist in deren Buchsenschaft 17b eine weitere Umfangsnut 47 eingebracht. Diese nimmt im in Fig. 7 gezeigten Montageendzustand ebenfalls einen Außensicherungsring 48 zur axialen Sicherung der Isolierbuchse 17 gegenüber der Trennplatte 16 auf.

Aufgrund des gegenüber dem Buchsenschaft 17b vergleichsweise großen Außendurchmesser des Buchsenkopfes 17b der als Kunststoffformteil hergestellten Isolierbuchse 17 ist an dieser ein Anlagekragen 49 gebildet, mit dem sich die Isolierbuchse 17 am Öffnungsrand der jeweiligen Stecköffnung 25 an der Plattenunterseite 16b der Trennplatte abstützt (Fig. 7). Oberhalb des Anlagekragens 49 und unterhalb der kopfseitigen Kragenausnehmung 30 ist in die Isolierbuchse 17 eine weitere Umfangsnut 50 eingebracht. Diese dient zur Vergrößerung der Luft- und Kriechstrecken.

Die Erfindung betrifft somit eine elektrische Maschine 1 mit einem Maschinengehäuse 2 zur Aufnahme eines Stators 3 und eines Rotor 4 mit Stator- und/oder Rotorwicklungen 5, die mit Verbindungsleitungen 8 zur elektrischen Anschlusskontaktierung verbundenen sind. Eine einen Leitungskanal 12 zur Aufnahme der Verbindungsleitungen 8 abdeckende Trennplatte 16 weist eine Anzahl von Isolier buchsen 17 auf, in die mit den Verbindungsleitungen 8 kontaktierbare Anschlussbolzen 9, 10 eingesteckt sind. Dabei sind die Anschlussbolzen 9, 10 gegenüber den Isolierbuchsen 17 sowie vorzugsweise die Isolierbuchsen 17 zur Trennplatte 16 lage- bzw. winkelkodiert in diese eingesteckt.

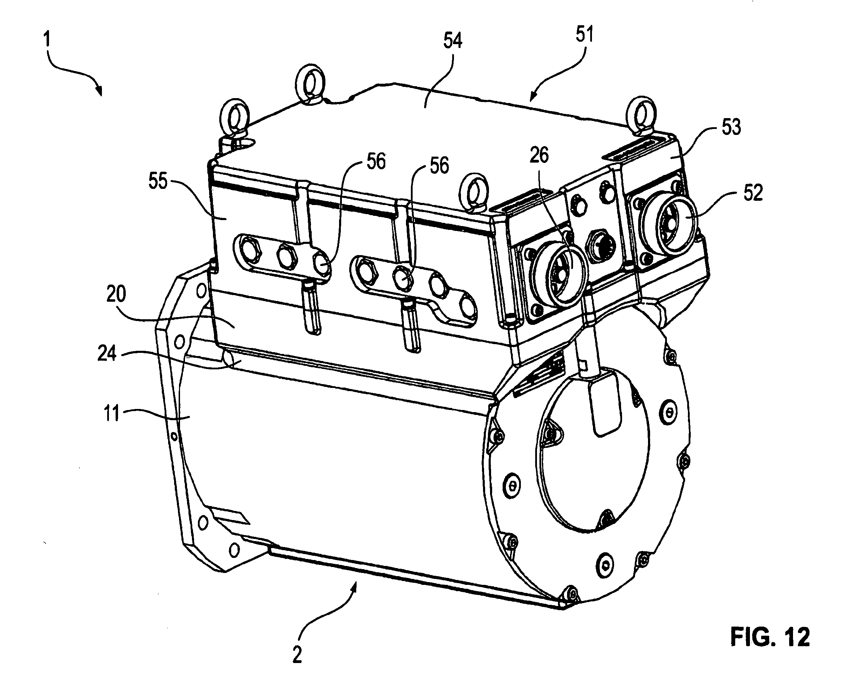

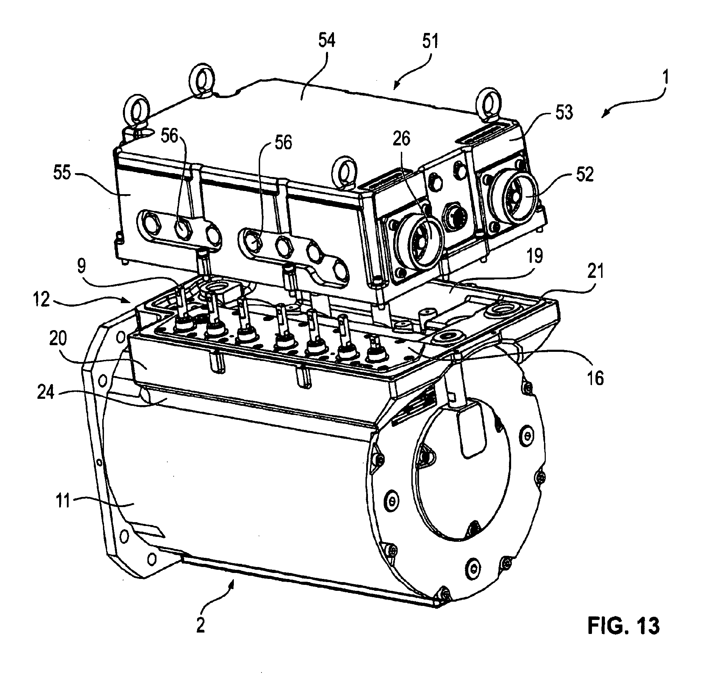

Die Fig. 12 und 13 zeigen die elektrische Maschine 1 mit integrierter Leistungselektronik 51. Die Leistungselektronik 51 arbeitet beispielsweise als Umrichter und wandelt maschinenseitigen Wechselstrom (AC) in elektronikausgangsseitigen Gleichstrom (DC). Hierzu können in an sich bekannter Art und Weise Halbleiterschalter, beispielsweise IGBT's, in Brückenschaltung miteinander verschaltet und steuereingangsseitig (gateseitig) bestimmungsgemäß angesteuert werden. Die elektrische Maschine 1 kann dabei als Generator oder als Motor arbeiten. Bei deren Betriebsweise als Motor wird der Elektronik 51 über gehäuseseitige, kombinierte Leistungs- und Kühlmittelanschlusse (Ölanschlüsse) 52 eine Gleichspannung bzw. ein Gleichstrom zugeführt, während beim Betrieb als Generator an diesen kombinierten Leistungs- und Kühlmittelanschlüssen 52 ein entsprechend generatorisch erzeugter Gleichstrom abgreifbar und beispielsweise in einen Zwischenkreis einspeisbar ist.

Im Betrieb als Generator dient die elektrische Maschine 1 beispielsweise zur Rückspeisung von Energie in ein Bordnetz eines insbesondere auch mobilen Nutzfahrzeugs oder zum Betrieb eines Fahrzeugaggregates. In der Betriebsweise als Motor wird die Elektronik 51 mit einer Gleichspannung aus dem üblicherweise DC-Bordnetz des Nutzfahrzeugs betrieben, um ein Aggregat des Nutzfahrzeugs anzutreiben.

Während die kombinierten Leistungs- und Kühlmittelanschlüsse 52 an einer Schmal- oder Stirnseite 53 des Elektronik- bzw. Umrichtergehäuses 54 vorteilhaft angeordnet sind, dient die dem Leitungskanal 12 und damit der Trennplatte 16 zugewandte Längsseite 55 des Elektronik- bzw. Umrichtergehäuses 54 zur Anordnung von zweckmäßigerweise als Schraub- oder Steckkontakte ausgeführten Kontaktanschlüssen 56. Diese dienen der elektrischen Kontaktierung und mechanischen Fixierung der Anschlussbolzen 9 mit der Leistungselektronik 51, um die elektrische Verbindung (Übergabe) zur Elektronik 51 herzustellen.

Hierzu wird im Anschluss an die Verlegung der Verbindungsleitungen 8 im Leitungskanal 12 und dessen anschließender druckdichter Abdeckung mittels der Trennplatte 16 das die Elektronik 51 oder lediglich klemmenkastenartige Anschlüsse enthaltene Gehäuse 54 auf die Montageplattform 19 aufgesetzt und mit dieser verschraubt. Dabei werden die Anschlüsse 9 sowie an der in x-Richtung verlaufenden Längsseite des Maschinengehäuses 2 über die Trennplatte 16 (der oder auf der Montageplattform 19) an die Elektronik 51 übergeben.

Insgesamt ist somit eine besonders kompakte und dabei hochfunktionale elektrische Maschine 1 bereitgestellt, deren Montage - auch zu Servicezwecken - besonders einfach und zuverlässig handhabbar und daher besonders montagefreundlich ist. Die Trennplatte 16 bildet dabei quasi eine druck- und/oder fluiddichte Schnittstelle zwischen den als Maschinenanschlüsse oder -kontakte dienenden Anschlussbolzen 9 und der Elektronik (Umrichter- oder Wandlerelektronik) 51.

**Bezugszeichenliste**

| | | | |
|---|---|---|---|
| 1 | Maschine | 26 | Kodieröffnung |
| 2 | Maschinengehäuse | 27 | Kodierstift/-element |
| 3 | Stator | 28 | Axialnut/Kodierelement |
| 4 | Rotor | 29 | Buchsen-/Isolierkragen |
| 5 | Spulen-/Statorwicklung | 30 | Kragenausnehmung |
| 6 | Spaltrohr | 31 | Kabelschuh |
| 7 | Welle | 32 | Stufe |
| 8 | Verbindungsleitung | 33 | Kodierkontur |
| 9 | Anschlussbolzen | 34 | Kodierausnehmung |
| 9a | Bolzenkopf | 35 | Eckbereich |
| 9b | Bolzenschaft | 36 | Plattenlängskante |
| 10 | Anschlussbolzen | 37 | Gewindebohrung |
| 11 | Gehäusewandung | 38 | Fixierschraube |
| 12 | Leitungskanal | 39 | Gewindebohrung |
| 13 | Längsende | 40 | Umfangsnut |
| 14 | Durchtrittsöffnung | 41 | Dichtring |
| 15 | Innenraum | 42 | Umfangsnut |
| 16 | Trennplatte | 43 | Außensicherungsring |
| 16a | Plattenober-/außenseite | 44 | Schlüsselfläche |
| 16b | Plattenunter-/innenseite | 45 | Umfangsnut |
| 17 | Isolierbuchse | 46 | Dichtelement |
| 17a | Buchsenkopf | 47 | Umfangsnut |
| 17b | Buchsenschaft | 48 | Außensicherungsring |
| 18 | Kontaktfläche | 49 | Anlagekragen |
| 19 | Montageplattform | 50 | Umfangsnut |
| 20 | Gehäuserahmen | 51 | Elektronik/Umrichter |
| 21 | Dichtfläche/-kante | 52 | Leistungs-/Kühlmittelanschluss |
| 22 | Kühlmittelauslass | 53 | Schmalseite |
| 23 | Kühlmitteleinlass | 54 | Elektronik-/Umrichtergehäuse |
| 24 | Gehäusezwickel | 55 | Längsseite |
| 25,25' | Stecköffnung | 56 | Kontaktanschluss |

## Patentansprüche

1. Elektrische Maschine (1), mit einem Maschinengehäuse (2) zur Aufnahme eines Stators (3) und eines Rotors (4) mit Stator- und/oder Rotorwicklungen (5), die mit Verbindungsleitungen (8) zur elektrischen Anschlusskontaktierung verbundenen sind, und mit einem Leitungskanal (12) zur Aufnahme der Verbindungsleitungen (8) sowie mit einer den Leitungskanal (12) abdeckenden Trennplatte (16),
**dadurch gekennzeichnet,**
**dass** die Trennplatte (16) eine Anzahl von Isolierbuchsen (17) aufweist, in die mit den Verbindungsleitungen (8) kontaktierbare Anschlussbolzen (9, 10) lagekodiert eingesteckt sind.

2. Elektrische Maschine (1) nach Anspruch 1,
**dadurch gekennzeichnet,**
**dass** die Isolierbuchsen (17) gegenüber der Trennplatte (16) winkelkodiert in diese eingesetzt sind.

3. Elektrische Maschine (1) nach Anspruch 1 oder 2,
**dadurch gekennzeichnet,**
**dass** die Isolierbuchsen (17) einen eine korrespondierende Stecköffnung (25, 25') der Trennplatte (16) durchsetzenden Buchsenhohlschaft (17b) und einen Buchsenkopf (17a) aufweist, der unter Bildung eines sich an der Trennplatte (16) auf deren Plattenoberseite (16a) abstützenden Anlagekragens (49) an den Buchsenhohlschaft (17b) angeformt ist.

4. Elektrische Maschine (1) nach einem der Ansprüche 1 bis 3,
**dadurch gekennzeichnet,**
**dass** jede Isolierbuchse (17) eine Kragenausnehmung (30) ausweist, die entsprechend der Winkelkodierung bezüglich der Trennplatte (16) in Richtung auf eine im Maschinengehäuse (2) vorgesehene und in den Leitungskanal (12) einmündende Durchtrittsöffnung (14) für die Verbindungsleitungen (8) orientiert ist.

5. Elektrische Maschine (1) nach einem der Ansprüche 1 bis 4,
**dadurch gekennzeichnet,**
**dass** die Isolierbuchsen (17) innenseitig eingezogene Kodierausnehmungen (34) aufweist, in die am Anschlussbolzen (9, 10) kopfseitig vorgesehene Kantenbereiche (35) der Winkelkodierung entsprechend eingreifen.

6. Elektrische Maschine (1) nach einem der Ansprüche 1 bis 5,
**dadurch gekennzeichnet,**
**dass** die Anschlussbolzen (9, 10) einen, vorzugsweise im Wesentlichen quadratischen, Bolzenkopf (9a) und einen sich daran anschließenden Bolzenschaft (9b) mit einem in der Isolierbuchse (17) einliegenden Schaftabschnitt und einem aus der Trennplatte (16) auf deren Plattenoberseite (16a) herausragendes Schaftende mit einer, vorzugsweise planen, Kontaktfläche (18) aufweisen.

7. Elektrische Maschine (1) nach einem der Ansprüche 1 bis 6,
**dadurch gekennzeichnet,**
**dass** die Anschlussbolzen (9, 10) derart kodiert in die in der Trennplatte (16) kodiert einsitzenden Isolierbuchsen (17) eingesteckt sind, dass deren aus der Trennplatte (16) herausragenden Kontaktflächen (18), vorzugsweise zur Plattenlängsseite (36) der Trennplatte (16) ausgerichtet, miteinander fluchten.

8. Elektrische Maschine (1) nach einem der Ansprüche 1 bis 7,
**dadurch gekennzeichnet,**
**dass** die Verbindungsleitungen (8) im Wesentlichen rechtwinklig zu den Anschlussbolzen (9, 10) verlaufend an diesen schraubkontaktiert sind.

9. Maschinengehäuse (2) einer elektrischen Maschine (1), mit in dessen Gehäusewandung (11) einer in einen Leitungskanal (12) für Verbindungsleitungen (8) zwischen Maschinen- oder Spulenwicklungen (5) und Maschinenanschlüssen mündenden Durchtrittsöffnung (14), **dadurch gekennzeichnet, daß** der Leitungskanal (12) mit einer Trennplatte (16) abgedeckt ist, in die Isolierbuchsen (17) mit darin lagekodiert eingesteckten Anschlussbolzen (9, 10) als Maschinenanschlüssen für die Verbindungsleitungen (8) eingesetzt sind.

10. Elektrische Maschine (1), insbesondere fluidgekühlte Maschine, zum Betreiben eines Kraft- oder Arbeitsaggregates eines Nutzfahrzeugs, mit einem Maschinengehäuse (2) nach Anspruch 9.

## Claims

1. Electrical machine (1), having a machine housing (2) to receive a stator (3) and a rotor (4) having stator and/or
rotor windings (5), which are connected to connecting lines (8) for the purpose of electrical contacting, and having a duct (12) to receive the connecting lines (8), as well as having a dividing plate (16) that covers the duct (12),
**characterised in that**,
the dividing plate (16) has a number of insulating bushes (17), into which connecting pins (9, 10) that are contactable with the connecting lines (8) are inserted with positional coding.

2. Electrical machine (1) according to claim 1,
**characterised in that**,
the insulating bushes (17) opposite the dividing plate (16) are inserted into this dividing plate with angular coding.

3. Electrical machine (1) according to claim 1 or 2,
**characterised in that**,
the insulating bushes (17) have a hollow bush shaft (17b) and a bush head (17a) pushing through a corresponding plug opening (25, 25') of the dividing plate (16), said bush head being fitted onto the hollow bush shaft (17b) under formation of an attachment collar (49) supported on the dividing plate (16) on its plate upper side (16a).

4. Electrical machine (1) according to one of claims 1 to 3,
**characterised in that**,
each insulating bush (17) has a collar recess (30), which is positioned according to the angular coding with respect to the dividing plate (16) in the direction of an opening (14) for the connecting lines (8) provided in the machine housing (2) and flowing into the duct (12).

5. Electrical machine (1) according to one of claims 1 to 4,
**characterised in that**,
the insulating bushes (17) have coding recesses (34) withdrawn into their interior, with which edge regions (35) of the angular coding engage accordingly, said regions being provided at the head side on the connecting pin (9, 10).

6. Electrical machine (1) according to one of claims 1 to 5,
**characterised in that**,
the connecting pins (9, 10) have a preferably substantially square pin head (9a) and a pin shaft (9b) attached thereto, having a shaft section enclosed in the insulating bush (17) and a shaft end protruding from the dividing plate (16) on its plate upper side (16a), having a preferably planar contact surface (18).

7. Electrical machine (1) according to one of claims 1 to 6,
**characterised in that**,
the connecting pins (9, 10) are inserted into the insulating bush (17) located with coding in the dividing plate (16), with such a level of coding that its contact surfaces (18) protruding from the dividing plate (16), preferably configured with respect to the longitudinal plate side (36) of the dividing plate (16), are in alignment with one another.

8. Electrical machine (1) according to one of claims 1 to 7,
**characterised in that**,
the connecting lines (8) are substantially at right angles to the connecting pins (9, 10), running with a screw contact to these.

9. Machine housing (2) of an electrical machine (1), having, in its housing wall (11), an opening (14) flowing into a duct (12) for connecting lines (8) between the machine or coil windings (5) and the machine connections,
**characterised in that**,
the duct (12) is covered with a dividing plate (16), into which insulating bushes (17) having connecting pins (9, 10) inserted with positional coding therein are used as machine connections for the connecting lines (8).

10. Electrical machine (1), in particular a liquid-cooled machine, for the operation of a power generation unit or work unit of a utility vehicle, having a machine housing (2) according to claim 9.

## Revendications

1. Machine électrique (1) comprenant un carter de machine (2) destiné à recevoir un stator (3) et un rotor (4) avec des enroulements de stator et/ou de rotor (5), qui sont reliés à des conducteurs de liaison (8) pour assurer la connexion de raccordement électrique, et la machine électrique comprenant également un canal de conducteurs (12) destiné à loger les conducteurs de liaison (8), ainsi qu'une plaque de cloisonnement (16) recouvrant le canal de conducteurs (12),
**caractérisée**
**en ce que** la plaque de cloisonnement (16) présente un certain nombre de douilles d'isolation (17) dans lesquelles sont emmanchées, de manière codée en position, des broches de raccordement (9, 10) pouvant être connectées aux conducteurs de liaison (8).

2. Machine électrique (1) selon la revendication 1,
**caractérisée**
**en ce que** les douilles d'isolation (17) sont insérées dans la plaque de cloisonnement (16) de manière codée angulairement par rapport à celle-ci.

3. Machine électrique (1) selon la revendication 1 ou la revendication 2,
**caractérisée**
**en ce que** la douille d'isolation (17) présente un corps creux de douille (17b) traversant une ouverture d'emmanchement (25, 25') correspondante de la plaque de cloisonnement (16), et une tête de douille (17a), qui est formée sur le corps creux de douille (17b) en formant une collerette d'appui (49) s'appuyant contre la plaque de cloisonnement (16), sur son côté supérieur de plaque (16a).

4. Machine électrique (1) selon l'une des revendications 1 à 3,
**caractérisée**
**en ce que** chaque douille d'isolation (17) présente une encoche de collerette (30), qui est orientée, conformément au codage angulaire par rapport à la plaque de cloisonnement (16), en direction d'une ouverture de passage (14) pour les conducteurs de liaison (8), qui est prévue dans le carter de machine (2) et débouche dans le canal de conducteurs (12).

5. Machine électrique (1) selon l'une des revendications 1 à 4,
**caractérisée**
**en ce que** la douille d'isolation (17) présente de façon dégagée sur le côté intérieur, des évidements de codage (34) dans lesquels s'engagent, conformément au codage angulaire, des zones d'arête (35) prévues du côté de la tête sur la broche de raccordement (9, 10).

6. Machine électrique (1) selon l'une des revendications 1 à 5,
**caractérisée**
**en ce que** les broches de raccordement (9, 10) présentent une tête de broche (9a), de préférence sensiblement de forme carrée, et, s'y raccordant, un corps de broche (9b) avec un tronçon de corps inséré dans la douille d'isolation (17), et une extrémité de corps de broche faisant saillie hors de la plaque de cloisonnement (16) sur son côté supérieur de plaque (16a), et comportant une surface de contact (18), de préférence plane.

7. Machine électrique (1) selon l'une des revendications 1 à 6,
**caractérisée**
**en ce que** les broches de raccordement (9, 10) sont emmanchées de façon codée dans les douilles d'isolation (17) logées de manière codée dans la plaque de cloisonnement (16), de façon telle que leurs surfaces de contact (18) faisant saillie hors de la plaque de cloisonnement (16), soient mutuellement alignées, en étant de préférence orientées dans la direction du côté longitudinal de plaque (36) de la plaque de cloisonnement (16).

8. Machine électrique (1) selon l'une des revendications 1 à 7,
**caractérisée**
**en ce que** les conducteurs de liaison (8) sont connectés par vissage aux broches de raccordement (9, 10) en s'étendant sensiblement de manière perpendiculaire à celles-ci.

9. Carter de machine (2) d'une machine électrique (1), comprenant dans sa paroi de carter (11), une ouverture de passage (14) débouchant dans un canal de conducteurs (12) pour des conducteurs de liaison (8) entre des enroulements de machine ou de bobinage (5) et des bornes de raccordement de machine,
**caractérisé**
**en ce que** le canal de conducteurs (12) est recouvert par une plaque de cloisonnement (16) dans laquelle sont insérées des douilles d'isolation (17) dans lesquelles sont emmanchées de manière codée en position, des broches de raccordement (9, 10) en tant que de bornes de raccordement de machine pour les conducteurs de liaison (8).

10. Machine électrique (1), notamment machine refroidie par fluide, pour faire fonctionner un groupe moteur ou de travail d'un véhicule utilitaire, comprenant un carter de machine (2) selon la revendication 9.
